# EUROPÄISCHE PATENTSCHRIFT

(11) **EP 2 228 723 B1**
(45) Veröffentlichungstag und Bekanntmachung des Hinweises auf die Patenterteilung: **03.08.2011**
(21) Anmeldenummer: 10153952.6
(22) Anmeldetag: 18.02.2010
(51) Int. Cl.: G06F 11/16

(54) **Verfahren zur Fehlerbehandlung eines Rechnersystems**
Method for error treatment of a computer system
Procédé de gestion des erreurs d'un système de calcul

(30) Priorität: 10.03.2009 DE 102009001420
(43) Veröffentlichungstag der Anmeldung: 15.09.2010
(73) Patentinhaber: Robert Bosch GmbH, 70442 Stuttgart (DE)
(72) Erfinder: Mueller, Bernd, 71229 Leonberg (DE); Ferch, Markus, 71723 Grossbottwar (DE); Collani, Yorck, 71717 Beilstein (DE); Banski, Holger, Santa Clara, CA 95054 (US)

(56) Entgegenhaltungen:
- WO-A1-2006/045780
- US-A- 4 358 823
- US-A1- 2002 133 751
- US-A1- 2004 199 817

## Beschreibung

### Stand der Technik

Verfahren zur Fehlerbehandlung eines Rechnersystems, welches mindestens zwei Paare mit jeweils zwei Ausführungseinheiten aufweist, wobei die zwei Ausführungseinheiten ein gleiches Programm abarbeiten und die Ausgangssignale der Ausführungseinheiten eines Paares miteinander verglichen werden, wobei beim Auftreten einer Abweichung der Ausgangssignale der Ausführungseinheiten eines Paares voneinander ein Fehlersignal ausgegeben wird sowie eine Vorrichtung zur Durchführung des Verfahrens.

Ein gattungsgemäßes Verfahren ist aus der WO 2007/017381 A1 bekannt. Ein Multiprozessorsystem besitzt vier Ausführungseinheiten, wobei immer zwei Ausführungseinheiten gleiche Aufgaben und Prozesse abarbeiten. Mittels einer Vergleichseinheit werden die von jeweils zwei Ausführungseinheiten, die dieselben Programme abarbeiten, ausgegebenen Ausgangssignale verglichen und bei einer Abweichung dieser beiden Ausgangssignale voneinander ein Fehlersignal ausgegeben. Dieser als Vergleichsmodus bezeichnete Fall kommt hauptsächlich in Anwendungen mit hohen Fehlererkennungsanforderungen, z. B. sicherheitsrelevanten Anwendungen zum Einsatz. Er kann beispielsweise dadurch realisiert werden, dass die beiden Ausführungseinheiten zueinander im Lockstep Betrieb ablaufen.

Solche Mehrrechnerkonzepte werden in der Flugzeug-, der Automobil und der Automatisierungstechnik verwendet, um den erhöhten Anforderungen an Sicherheit und Zuverlässigkeit sowie auch Echtzeitanforderungen gerecht zu werden. Sie besitzen eine gute Fehlererkennung, wobei bei einer Fehlererkennung das zu überwachende System abgeschaltet wird.

Aus der Schrift US-A-4 358 823 ist ein Verfahren bekannt, bei dem zwei Rechnerpaare vorgesehen sind. Dabei ist jedoch nur eine Menge von Programmen vorgesehen, die von einem Rechnerpaar bearbeitet wird. Wenn dieses Rechnerpaar ausfällt, so wird die Bearbeitung der gleichen Programmmenge durch das zweite im Standby-Betrieb vorgehaltene Rechnerpaar abgearbeitet.

### Offenbarung der Erfindung

Der Erfindung liegt somit die Aufgabe zugrunde, ein Verfahren und eine Vorrichtung zur Fehlerbehandlung eines Rechnersystems anzugeben, bei welchen sowohl die Sicherheit und als auch die Verfügbarkeit des Rechnersystems gleichzeitig aufrechterhalten werden.

Ein Verfahren zur Fehlerbehandlung eines Rechnersystems mit den Merkmalen des Patentanspruchs 1 hat den Vorteil, dass auf eine Komplettabschaltung des Rechnersystems verzichtet werden kann und trotzdem ein sicherer Betrieb des Rechnersystems möglich ist. Dadurch, dass beim Auftreten des Fehlersignales eines Paares das Programm zwischen wenigstens zwei Mengen von mindestens eine Funktion beschreibenden Programmteilen umgeschaltet wird, bleibt das Rechnersystem verfügbar, ohne dass alle Recheneinheiten redundant vorgehalten werden müssen. Im Fehlerfall ist ein Weiterbetrieb des Rechnersystems möglich und das Rechnersystem ist voll funktionsfähig. Es erfüllt alle notwendigen Sicherheitsanforderungen, da Hardwarefehler in den Ausführungseinheiten auch weiterhin erkannt werden. Das Gesamtsystem kann so lange ohne Reparatur weiterbetrieben werden, bis ein weiterer Fehler auftritt.

Gemäß der Erfindung wird nach dem Auftreten des Fehlersignals das fehlerhaft arbeitende Paar abgeschaltet, wobei das fehlerfrei arbeitende Paar die zweite Menge von mindestens eine Funktion beschreibenden Programmteilen bearbeitet, die wenigstens eine Basisfunktionalität des Rechnersystems umfasst. Durch die Übernahme der Programmabarbeitung durch das fehlerfrei arbeitende Paar an Ausführungseinheiten wird eine schnelle Weiterführung des Programms realisiert und die zur Verfügung stehende Rechnerzeit optimal ausgenutzt.

In dieser Ausgestaltung unterscheiden sich die erste Menge von mindestens eine Funktion beschreibenden Programmteilen und die zweite Menge von mindestens eine Funktion beschreibenden Programmteilen in ihrem Funktionsumfang. Dabei wird ausgenutzt, dass Rechnersysteme aus Basisfunktionalitäten und solchen Funktionalitäten bestehen, die nicht unbedingt zum Betrieb des Rechnersystems benötigt werden. Durch die Beschränkung auf die Basisfunktionalitäten wird nicht nur Rechenzeit eingespart, sondern auch die Möglichkeit des wiederholten Auftretens des Fehlers eingeengt.

Vorteilhafterweise wird die erste Menge von mindestens eine Funktion beschreibenden Programmteilen nur ausgeführt, wenn das Fehlersignal an dem Paar ausbleibt, während die zweite Menge von mindestens eine Funktion beschreibenden Programmteilen nur ausgeführt wird, wenn an einem Paar ein Fehlersignal detektiert wird. Die Verwendung zweier Mengen von wenigstens eine Funktion beschreibenden Programmteilen erlaubt die eingeschränkte Fortführung der Aktivität des Rechnersystems. Beide Mengen sind nicht identisch, können aber zum Teil gleiche Programmteile enthalten, um mindestens eine Funktionalität des Rechnersystems aufrechtzuerhalten.

In einer Weiterbildung sind die eine Menge von mindestens eine Funktion beschreibenden Programmteilen, welche vor der Detektion eines Fehlers eines Paares ausgeführt wird, als auch die andere Menge von mindestens eine Funktion beschreibenden Programmteilen, die nach dem Auftreten des Fehlersignales ausgeführt wird, sicherheitsrelevant. Somit wird der Einsatz in all solchen Anwendungen möglich, in denen erhöhte Anforderungen an Sicherheit und Zuverlässigkeit bestehen. Solche Anwendungen sind beispielsweise in der Flugzeug- und in der Automobilindustrie gegeben.

Vorteilhafterweise führt das fehlerhaft arbeitende Paar von Ausführungseinheiten einen Selbsttest durch und wird bei Ausbleiben eines weiteren Fehlersignales wieder in Betrieb genommen und bearbeitet die erste Menge von mindestens eine Funktion beschreibenden Programmteilen, welche die Gesamtfunktionalität des Rechnersystems umfasst. Bei Ausbleiben des Fehlersignales während des Selbsttestes wird davon ausgegangen, das nur ein transienter Fehler vorlag, welcher durch EMV-Einstrahlungen, radioaktive oder kosmische Einflüsse kurzzeitig hervorgerufen wurde und nicht noch einmal auftritt. Das Rechnersystem kann somit in seinem Normalbetrieb ohne Einschränkungen weiterarbeiten.

In einer Ausgestaltung wird beim Auftreten des weiteren Fehlersignals das fehlerhaft arbeitende Paar von Ausführungseinheiten permanent abgeschaltet. Bei einem Wiederauftreten des Fehlersignales muss darauf geschlossen werden, dass ein Hardwarefehler in einer der Ausführungseinheiten vorliegt, weshalb das entsprechende Paar von Ausführungseinheiten dauerhaft abgeschaltet wird und der folgende Programmablauf durch das weitere Paar an Ausführungseinheiten durchgeführt wird. Eine Gesamtabschaltung des Rechnersystems kann somit unterbleiben.

In einer Weiterbildung erfolgt die Abschaltung des fehlerhaft arbeitenden Paares von Ausführungseinheiten durch eine Unterbrechung eines Taktsignals. Mittels dieser einfachen Methode werden die Ausführungseinheiten des fehlerhaft arbeitenden Paares abgeschaltet, ohne dass der laufende Betrieb des Rechnersystems gestört wird.

Alternativ erfolgt die Abschaltung des fehlerhaft arbeitenden Paares von Ausführungseinheiten durch die Unterbrechung der Spannungsversorgung. Auch diese Maßnahme bleibt ohne Auswirkungen auf die laufende Arbeitsweise des Rechnersystems.

In einer anderen Variante erfolgt die Abschaltung des fehlerhaft arbeitenden Paares von Ausführungseinheiten durch Einschalten eines Haltesignals an dem fehlerhaft arbeitenden Paar. Durch dieses Haltesignal verharren die Ausführungseinheiten des fehlerhaft arbeitenden Paares in ihrem aktuellen Zustand ohne weitere Ausgangssignale auszugeben.

Vorteilhafterweise erfolgt die Detektion des Fehlersignales während eines Starts des Rechnersystems, wobei das fehlerhaft arbeitende Paar nicht in Betrieb genommen wird und das fehlerfrei arbeitende Paar von Beginn an die zweite Menge von mindestens eine Funktion beschreibenden Programmteilen ausführt. Da während des Starts des Rechnersystems beide Ausführungseinheiten beider Paare auf ihre Funktionsfähigkeit hin getestet werden, kann die Menge von wenigstens eine Funktion beschreibenden Programmteilen von vorn herein ausgewählt werden.

In einer Ausgestaltung wird ein Paar von Ausführungseinheiten nur beim Auftreten eines Fehlersignales des anderen Paares an Ausführungseinheiten in Betrieb genommen. Das heißt, während ein Paar an Ausführungseinheiten den normalen Programmablauf des Rechnersystems bearbeitet, stellt das andere Paar lediglich eine sicherheitsrelevante Redundanz dar, welche im Fehlerfall eingesetzt wird.

In einer Variante bleibt das Paar von Ausführungseinheiten bei Ausbleiben eines Fehlersignales des anderen Paares an Ausführungseinheiten ausgeschaltet oder führt mindestens einen Selbsttest durch. Dies hat den Vorteil, dass immer davon ausgegangen werden kann, dass das andere Paar von Ausführungseinheiten fehlerfrei arbeitet und somit betriebsbereit ist.

In einer anderen Weiterbildung der Erfindung weist mit den Merkmalen des Patentanspruchs 10 eine Vorrichtung zur Fehlerbehandlung eines Rechnersystems mindestens zwei Paare mit jeweils zwei Ausführungseinheiten auf, wobei die zwei Ausführungseinheiten ein gleiches Programm abarbeiten und die Ausgangssignale der Ausführungseinheiten eines Paares miteinander verglichen werden, wobei beim Auftreten einer Abweichung der Ausgangssignale der Ausführungseinheiten eines Paares voneinander ein Fehlersignal ausgegeben wird. Um sowohl die Sicherheit und als auch die Verfügbarkeit des Rechnersystems gleichzeitig aufrechterhalten zu können, sind Mittel vorhanden, welche beim Auftreten des Fehlersignales eines Paares das Programm zwischen wenigstens zwei Mengen von mindestens eine Funktion beschreibenden Programmteilen umschaltet. Der Vorteil besteht darin, dass im Fehlerfall ein Weiterbetrieb des Rechnersystems möglich ist. Das Rechnersystem arbeitet somit auch im Fehlerfall sicher und zuverlässig, ohne dass eine Komplettabschaltung des Rechnersystems erfolgen muss.

Vorteilhafterweise ist jedes Paar von Ausführungseinheiten mit einer den Fehlerfall signalisierenden Vergleichseinheit verbunden, welche über eine Kommunikationsleitung auf mindestens einen Speicher führt, der Programmbefehle und/oder Programmdaten zur Aktivierung der ersten oder der zweiten Menge von mindestens eine Funktion beschreibenden Programmteilen enthält. Durch die Übernahme der Fehlersignalisierung durch die Vergleichseinheit kann auf zusätzliche Bauteile des Rechnersystems verzichtet werden.

In einer Ausgestaltung weist die Vergleichseinheit des fehlerhaft arbeitenden Paares von Ausführungseinheiten eine Statusanzeige auf, welche bei Vorliegen eines Fehlersignals geändert wird. Die Statusanzeige kann von allen Bestandteilen des Rechnersystems gelesen werden, wodurch die Information über einen möglichen Fehlerfall im Gesamtsystem verbreitet wird und die Bestandteile des Rechnersystems sich in ihrer Funktionsweise darauf einstellen können.

In einer Weiterbildung ist die Statusanzeige der dem fehlerhaft arbeitenden Paar von Ausführungseinheiten zugeordneten Vergleichseinheit durch das fehlerfrei arbeitende Paar von Ausführungseinheiten lesbar. Somit ist eine direkte Information zwischen den beiden Paaren im Fehlerfall gegeben.

Vorteilhafterweise gibt die dem fehlerhaft arbeitenden Paar von Ausführungseinheiten zugeordneten Vergleichseinheit bei Feststellung eines Fehlers einen Interrupt aus, welcher von den Ausführungseinheiten des fehlerfrei arbeitenden Paares empfangen wird. Durch diese direkte Information der Ausführungseinheiten des fehlerfrei arbeitenden Paares können die beiden Ausführungseinheiten ohne Verzögerung in einen Fehlermodus schalten.

Die Erfindung lässt zahlreiche Ausführungsformen zu. Eine davon soll anhand der in der Zeichnung dargestellten Figuren näher erläutert werden.

Es zeigt:
- Figur 1:: Ausführungsbeispiel eines Rechnersystems mit zwei Paaren von Recheneinheiten
- Figur 2:: Struktur eines Laufzeitobjektes
- Figur 3:: Darstellung zweier Mengen von Laufzeitobjekten
- Figur 4:: erstes Beispiel für einen schematischen Programmablauf des er- findungsgemäßen Verfahrens
- Figur 5:: zweites Beispiel für einen schematischen Programmablauf des erfindungsgemäßen Verfahrens
- Figur 6:: Rechnersystem nach Figur 1 mit einer Takteinheit
- Figur 7:: Rechnersystem nach Figur 1 mit einer Spannungsversorgung
- Figur 8:: Rechnersystem nach Figur 1 mit einer Haltesignaleinheit

Gleiche Merkmale sind mit gleichen Bezugszeichen gekennzeichnet.

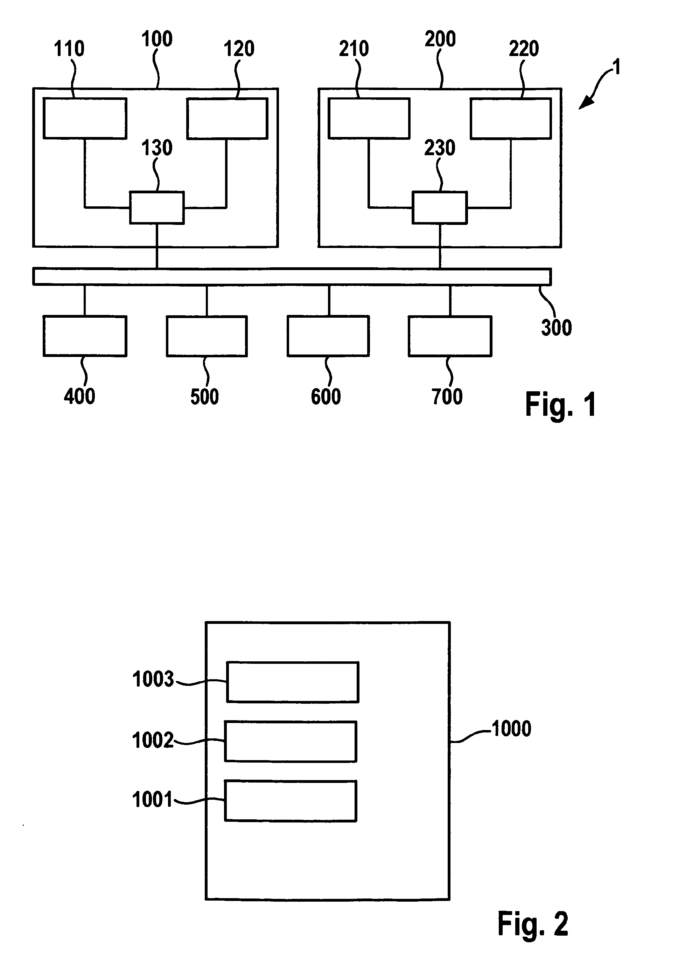

In Figur 1 ist ein Rechnersystem 1 dargestellt, welches vier Recheneinheiten 110, 120, 210 und 220 umfasst. Jeweils zwei Recheneinheiten 110, 120, 210, 220 sind zu je einem Paar 100, 200 zusammengefasst. Die Recheneinheiten 110, 120 bilden das Paar 100 und die Recheneinheiten 210, 220 bilden das Paar 200. Es sind noch weitere Paare von Recheneinheiten zuschaltbar. Der Übersichtlichkeit halber werden aber in den weiteren Ausführungen nur zwei Paare von Recheneinheiten betrachtet.

Die Recheneinheiten 110, 120 des ersten Paares 100 sind mit einer ersten Vergleichseinheit 130 verbunden, während die Recheneinheiten 210, 220 des zweiten Paares 200 auf eine zweite Vergleichseinheit 230 führen. Die erste 130 und die zweite Vergleichseinheit 230 sind mit einer Kommunikationsleitung 300 verbunden. An die Kommunikationsleitung 300 sind weitere Komponenten wie ein RAM 400, ein ROM 500, ein Flash-Speicher 600 sowie eine periphere Einheit 700 angeschlossen. In dem RAM 400 und dem ROM 500 sind sowohl Programmbefehle als auch Programmdaten abgelegt.

Jedes Paar 100, 200 von Recheneinheiten 110, 120 bzw. 210, 220 läuft in einem Vergleichsmodus, d.h. die beiden Recheneinheiten 110, 120 bzw. 210, 220 jedes Paares 100, 200 führen gleiche Aufgaben aus. Die Ausgangssignale der beiden Recheneinheiten 110, 120 bzw. 210, 220 jedes Paares 100, 200 werden von der jeweils zugeordneten Vergleichseinheit 130, 230 verglichen. Der Vergleichsmodus kann dabei über eine Lockstep-Verkopplung (d.h. die Recheneinheiten 110, 120; 210, 220 arbeiten taktsynchron), mittels eines Taktversatzes zwischen den beiden Recheneinheiten 110, 120 bzw. 210, 220 jedes Paares 100, 200 oder selbst asynchron realisiert werden.
Die Vergleichseinheiten 130, 230 können demzufolge Zwischenspeicher zur Ermöglichung einer Asynchronität enthalten, in welchen die Ergebnisse der einen Recheneinheit 110 bzw. 210 solange gespeichert werden, bis die zweite Recheneinheit 120 bzw. 220 die Berechnung der gleichen Aufgabe beendet hat und seine Ergebnisse zum Vergleich an die Vergleichseinheiten 130, 230 ausgibt.

Die beiden im Vergleichsmodus arbeitenden Paare 100, 200 schreiben und lesen über die Vergleichseinheiten 130, 230 auf die Kommunikationsleitung 300, welche als Datenbus, Crossbar oder ähnlich geartete Verbindung ausgeprägt ist und können gleichartig auf die Komponenten 400, 500, 600, 700 zugreifen.

Die Ausgangssignale der Recheneinheiten 110, 120; 210, 220 werden jeweils entsprechend dem Level ihrer Synchronität miteinander verglichen. Tritt in der Recheneinheit 110 ein Hardwarefehler auf, wirkt sich dieser Fehler so aus, dass sich die Ausgangssignale der Recheneinheit 110 von den Ausgangssignalen der Recheneinheit 120 unterscheiden. Genauso ist es, wenn der Hardwarefehler an der Recheneinheit 120 auftritt. Dann unterscheidet sich das Ausgangssignal der Recheneinheit 120 von dem Ausgangssignal der Recheneinheit 110 des Paares 100. Analog verhalten sich die Recheneinheiten 210, 220 des zweiten Paares 200. Wird nun von einer der Vergleichseinheiten 130, 230 ein Unterschied in den Ausgangssignalen der Recheneinheiten 110, 120; 210, 220 detektiert, löst die den Fehler feststellende Vergleichseinheit 130, 230 einen Interrupt an dem Paar 100, 200 von Recheneinheiten 120, 120; 210; 220 aus, deren Ausgangssignale identisch sind.

Während die Recheneinheiten 110, 120; 210, 220 jedes Paares jeweils dieselben Befehle ausführen, führen die beiden Paare 100, 200 unterschiedliche Befehle aus.

Welche Software auf welcher Recheneinheit 110, 120; 210, 220 ausgeführt wird, wird über ein eine Funktion beschreibendes Programmteil definiert, welches im Weiteren als Laufzeitobjekt 1000 bezeichnet werden soll. Ein solches in Figur 2 dargestelltes Laufzeitobjekt 1000 definiert einen Ausführungspfad. Zusätzlich besitzt es verschiedene Attribute, wie beispielsweise die Priorität 1001, den absoluten oder relativen Startzeitpunkt bei einem periodischen System 1002 oder die Nummer des Paares, welches das Laufzeitobjekt 1000 ausführen soll 1003. Zwei Laufzeitobjekte sind erst dann identisch, wenn sie in allen Attributen und dem Ausführungspfad übereinstimmen. Diese Laufzeitobjekte sind physikalisch im RAM 400 oder ROM 500 abgebildet. Die Attribute 1001 bis 1003 können als zusammenhängende Datenstruktur im Speicher 400, 500 abgelegt sein. Alternativ können sich die Attribute 1001, 1002, 1003 auch nur aus dem Zusammenhang im Programmcode ergeben. Die Laufzeitobjekte 1000 werden von einem Betriebssystem des Rechnersystems 1 verwaltet, indem das Betriebssystem den Laufzeitobjekten 1000 Rechenzeit zuweist. Bei der Verwaltung durch das Betriebssystem können die Laufzeitobjekte auch als Task, Prozess oder Thread bezeichnet werden.

Bei komplexeren Vorgängen, wie beispielsweise dem elektronischen Stabilitätsprogramm (ESP) in einem Kraftfahrzeug, die durch das Rechensystem 1 gesteuert werden, sind mehrere solcher Laufzeitobjekte 1000 vorhanden. Im vorgegebenen Fall besitzt das Rechnersystem 1 eine Vielzahl von Laufzeitobjekten 1000, die die Steuerung des Rechnersystems 1 übernehmen. Die Vielzahl der Laufzeitobjekte wird aufgrund eines vorab definierten Ereignisses aktiviert. Solche Ereignisse können zeitlicher Natur sein oder auch einen bestimmten Systemzustandswechsel betreffen.

Im vorliegenden Beispiel wird zwischen mindestens zwei unterschiedlichen Mengen an Laufzeitobjekten unterschieden. Die erste Menge 1100 umfasst alle Laufzeitobjekte, die im Normalbetrieb (also dem Nichtfehlerfall der Recheneinheiten 110, 120; 210, 220) aktiviert werden können, während die zweite Menge 1200 diejenigen Laufzeitobjekte enthält, die nur dann aktiviert werden können, wenn in einer der Recheneinheiten 110, 120; 210, 220 der beiden Paare 100, 200 ein Fehler aufgetreten ist. Die Schnittmenge der beiden Mengen muss nicht leer sein. Beide Mengen 1100, 1200 sind nicht identisch.

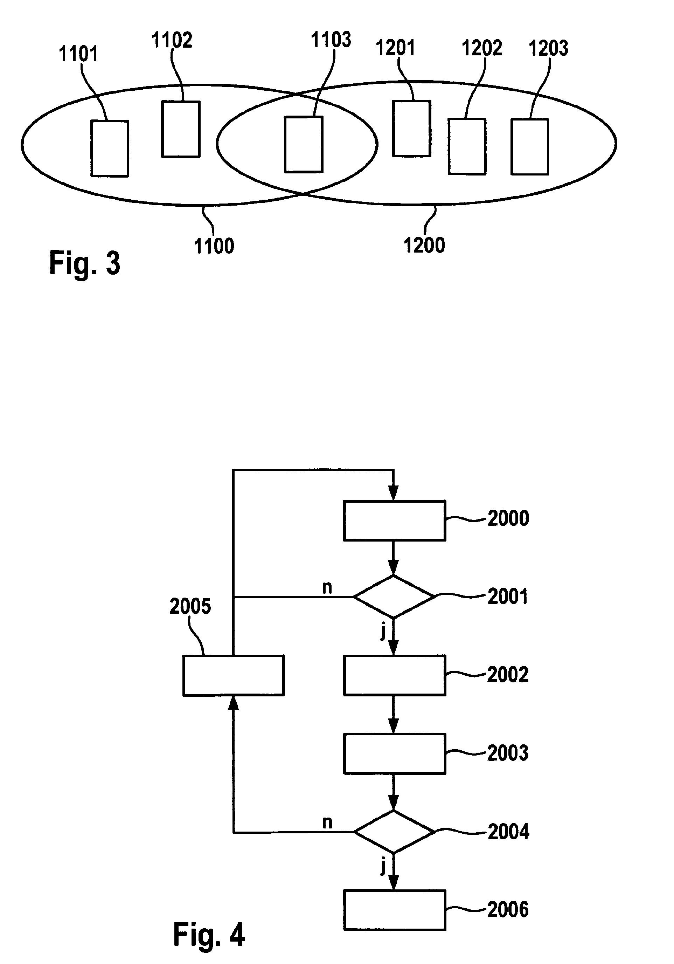

Wie anhand von Figur 3 verdeutlicht, umfasst die Menge 1100 die Laufzeitobjekte 1101, 1102 und 1103, die im Normalbetrieb ausgeführt werden. Im Fehlerfall können die Laufzeitobjekte 1201, 1202, 1203 der Menge 1200 ausgeführt werden. Dabei ist das Laufzeitobjekt 1103 der Menge 1100 auch Bestandteil der Menge 1200 und läuft somit auch im Fehlerfall weiter.

Im Normalbetrieb werden die Laufzeitobjekte 1101, 1102, 1103 auf die Paare 100, 200 von Recheneinheiten 110, 120; 210, 220 aufgeteilt. Das Gesamtsystem der Paare 100, 200 erfüllt seine Aufgabe im vollem Funktionsumfang. Insbesondere ist durch den Vergleich der Ausgangssignale der Recheneinheiten 110, 120; 210, 220 sichergestellt, dass Fehler in den Recheneinheiten 110, 120; 210, 220 erkannt werden, was eine Voraussetzung für den sicheren Betrieb des Rechnersystems 1 ist. Der Funktionsumfang der Mengen 1100, 1200, welche im Normalbetrieb bzw. im Fehlerfall benutzt werden, ist nicht identisch. Wird mit zwei Mengen 1100, 1200 gearbeitet, muss im Fehlerfall die Zuordnung der Laufzeitobjekte 1101, 1102, 1103, 1201, 1202, 1203 zu den Paaren 100, 200 von Recheneinheiten 110, 120; 210, 220 entweder ignoriert werden oder im Moment des Fehlers vorgenommen werden.
Dies lässt sich vermeiden, wenn mit drei Mengen gearbeitet wird.

Dabei wird wie folgt vorgegangen: Die erste Menge beschreibt die Laufzeitobjekte, die im Normalbetrieb laufen. Im Fehlerfall des ersten Paares 100 von Recheneinheiten 110, 120 wird auf die zweite Menge von Laufzeitobjekten umgeschaltet, bei der alle Laufzeitobjekte an das zweite Paar 200 von Recheneinheiten 210, 220 gebunden sind. Da durch Ausfall des ersten Paares 100 nicht mehr die volle Rechenleistung verfügbar ist, handelt es sich bei der zweiten Menge um andere Laufzeitobjekte mit anderen Ausführungspfaden.

Fällt während des Normalbetriebes das zweite Paar 200 von Recheneinheiten 210, 220 aus, wird auf eine dritte Menge umgeschaltet, welche mit der zweiten Menge identisch ist. Allerdings sind in der dritten Menge alle Laufzeitobjekte an das erste Paar 100 von Ausführungseinheiten 110, 120 gebunden.

Die Laufzeitobjekte der zweiten und der dritten Menge stellen die Basisfunktionalität des Rechnersystems 1 zur Verfügung. Handelt es sich beispielsweise bei dem Rechnersystem 1 um ein ESP-Steuergerät für ein Kraftfahrzeug, so wird als Basisfunktionalität die Bremskraftverteilung aufrechterhalten, während die restlichen Funktionalitäten nicht mehr betrieben werden. Es ist aber auch möglich nur die Regelgüte des ESP-Steuergerätes herabzusetzen oder spezielle Situationserkennungsverfahren nicht mehr zu berechnen.

In einer anderen Variante stellen die Laufzeitobjekte der zweiten und dritten Menge nur eine Funktionalität zur Verfügung, die sicherstellt, dass das Rechnersystem 1 nur für einen kurzen Zeitraum verfügbar ist. Im Falle eines ESP-Steuergerätes für ein Kraftfahrzeug wird z.B. die Höchstgeschwindigkeit des Kraftfahrzeuges begrenzt.

Mit Hilfe von Figur 4 soll nun ein möglicher Verfahrensablauf dargestellt werde, Im Block 2000 arbeitet das Rechnersystem 1 im Normalbetrieb, d.h. die Ausgangssignale der beiden Recheneinheiten 110, 120; 210, 220 sind identisch. Es wird die erste Menge 1100 von Laufzeitobjekten ausgeführt.

Wird im Block 2001 ein Fehler an dem Paar 100 von Recheneinheiten 110, 120 detektiert, wird im Block 2002 auf die zweite Menge 1200 von Laufzeitobjekten 1201, 1202, 1203 umgeschaltet, welche auf dem fehlerfrei arbeitenden Paar 200 von Recheneinheiten 210, 220 ausgeführt wird. Auf dem fehlerhaft arbeitenden Paar 100 wird im Block 2003 ein Selbsttest durchgeführt. Wird im Block 2004 bei diesem Selbsttest kein Fehler festgestellt, wird von einem transienten HardwareFehler ausgegangen und das Rechnersystem 1 wird wieder zurück in den Normalbetrieb geschaltet, indem im Block 2005 wieder auf die erste Menge 1100 von Laufzeitobjekten zurückgeschaltet wird. Wird allerdings bei dem Selbsttest in Block 2004 wieder ein Fehler an dem Paar 100 von Recheneinheiten 110, 120 festgestellt, wird im Block 2006 das Paar 100 von Recheneinheiten 110, 120 permanent abgeschaltet. Das Gesamtsystem gilt aber immer noch als sicher und kann solange ohne Reparatur, wenn auch mit reduzierter Rechenleistung, weiter betrieben werden, bis ein weiterer Fehler auftritt.

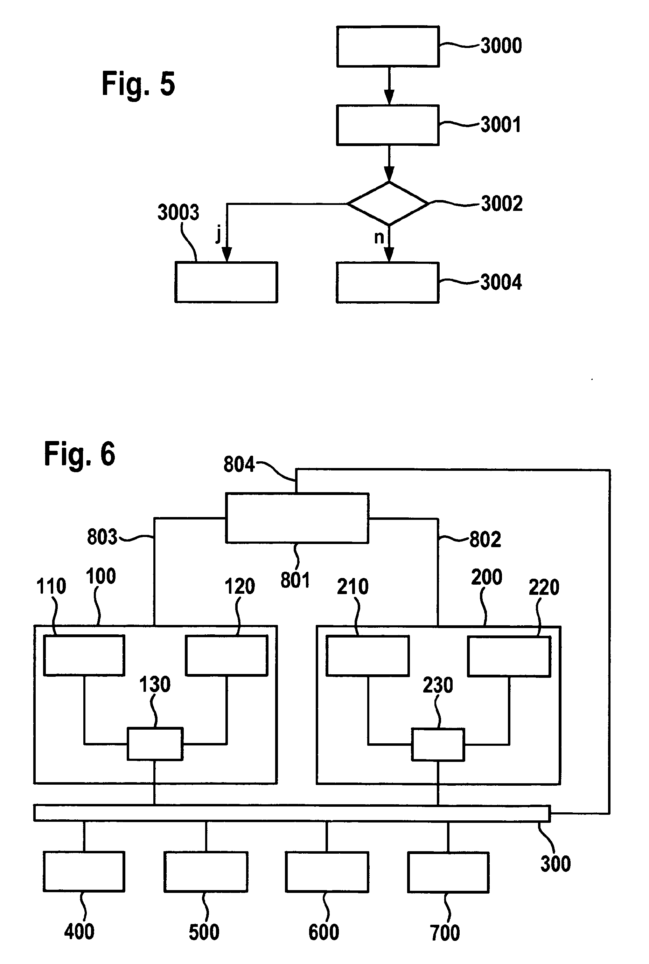

In einer anderen Ausführungsform, welche in Figur 5 dargestellt ist, findet der Test der Paare 100, 200 von Recheneinheiten 110, 120; 210, 220 bei einem Neustart des Rechnersystems 1 nach einem Reset statt (Block 3000). Nach dem Reset des Systems werden im Block 3001 beide Paare 100, 200 von Recheneinheiten 110, 120; 210, 220 getestet. Wird bei diesem Test ein Fehler in dem Paar 100 von Recheneinheiten 110, 120 entdeckt (Block 3002), wird das Rechnersystem 1 sofort mit der eingeschränkten Funktionalität der zweiten Menge 1200 von Laufzeitobjekten 1201, 1201, 1203 gestartet, die auf dem Paar 200 von Recheneinheiten 210, 220 ausgeführt wird (Block 3003). Wird kein Fehler entdeckt, so wird im Block 3004 das Rechnersystem 1 mit der ersten Menge 1100 von Laufzeitobjekten 1101, 1102, 1103 gestartet.

In einer besonderen Anwendung arbeitet im Normalbetrieb nur das Paar 100 von Recheneinheiten 110, 120. Das inaktive Paar 200 von Recheneinheiten 210, 220 ist abgeschaltet und wird nur bei einer Fehlerdetektion am ersten Paar 100 von Recheneinheiten 110, 120 aktiviert. Auch in diesem Fall wird bei der Aktivierung des zweiten Paares 200 von der ersten Menge 1100 von Laufzeitobjekten auf die zweite Menge 1200 von Laufzeitobjekten umgeschaltet.

Alternativ dazu ist das zweite Paar 200 von Recheneinheiten 210, 220 aktiv, führt aber permanent nur Selbsttests aus. Im Falle eines Fehlers an dem ersten Paar 100 von Recheneinheiten 110, 120 wird auch hier von der ersten Menge 1100 von Laufzeitobjekten auf die zweite Menge 1200 von Laufzeitobjekten umgeschaltet, wobei das zweite Paar 200 von Laufzeitobjekten 210, 220, welches die zweite Menge 1200 von Laufzeitobjekten 1201, 1202, 1203 ausführt, die Funktion des Rechnersystems 1 erbringt. Dabei wird das fehlerhaft arbeitende erste Paar 100 Recheneinheiten 110, 120 entweder sofort permanent abgeschaltet oder zunächst getestet und erst bei einem Wiederauftreten des Fehlers dauerhaft abgeschaltet.

Die Figur 6 zeigt eine Möglichkeit, wie das fehlerhaft arbeitende Paar 100, 200 dauerhaft abgeschaltet werden kann. In Erweiterung zur Figur 1 ist eine Einheit 801 vorhanden, welche über eine Taktleitung 802 mit dem zweiten Paar 200 von Recheneinheiten 210, 220 verbunden ist, während die Einheit 801 über eine weitere Taktleitung 803 mit dem ersten Paar 100 von Recheneinheiten 110, 120 verbunden ist. Weiterhin ist die Einheit 801 über die Leitung 804 mit der Kommunikationsleitung 300 verbunden. Wird auf der Kommunikationsleitung 300 durch eine der Vergleichseinheiten 130 bzw. 230 ein Interrupt infolge des Auftretens eines Fehlersignales ausgegeben, wird die entsprechende Taktleitung 802, 803 unterbrochen und somit das fehlerhaft arbeitende Paar 100, 200 von Recheneinheiten 110, 120, 210, 220 abgeschaltet. Die Verwendung der Taktleitungen 802, 803 erlaubt ein getrenntes Abschalten der Paare 100, 200 von Recheneinheiten 110,120; 210, 220.

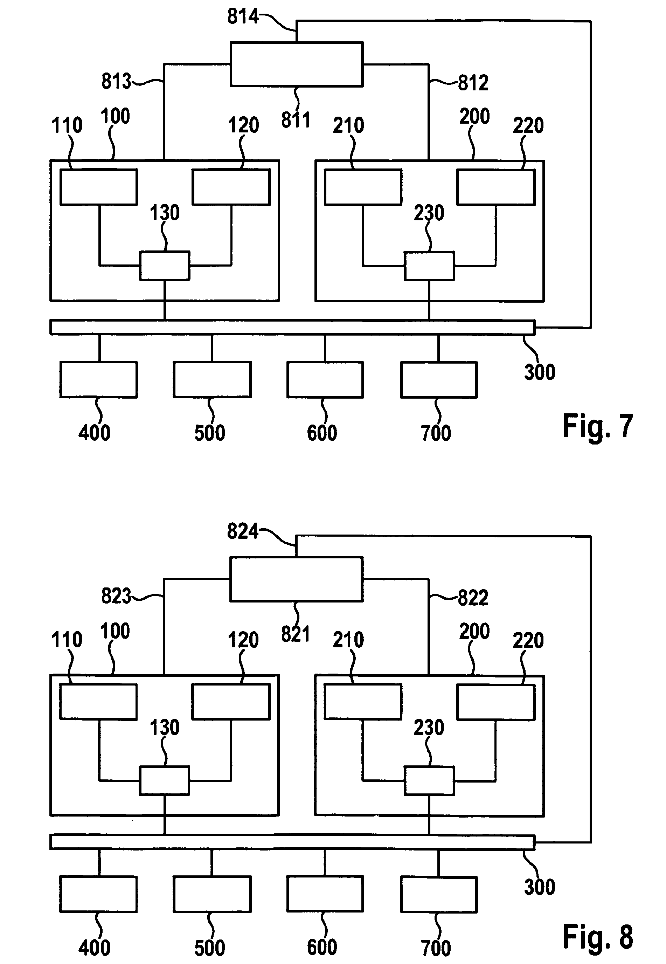

Wie aus Figur 7 ersichtlich, ist eine Spannungsversorgungseinheit 811 über die Leitungen 812 bzw. 813 mit dem zweiten Paar 200 von Recheneinheiten 210, 220 bzw. dem ersten Paar 100 von Recheneinheiten 110, 120 verbunden, welche die Paare 100, 200 mit Spannung versorgen. Darüber hinaus besteht eine Verbindung 813 mit der Kommunikationsleitung 300, über welche die Spannungsversorgungseinheit 811 im Fehlerfall die Information erhält, welches der beiden Paare 100, 200 von Recheneinheiten 110, 120, 210, 220 dauerhaft abgeschaltet werden soll. Dies erfolgt, indem die Spannungsversorgung an den Leitungen 812 bzw. 813 unterbrochen wird.

Eine weitere Möglichkeit der permanenten Abschaltung eines Paares 100, 200 von Recheneinheiten 110, 120, 210, 220 ist in Figur 8 dargestellt, wo eine Einheit 821 über die Leitung 824 mit der Kommunikationsleitung 300 verbunden ist.

Weiterhin ist das Paar 100 von Recheneinheiten 110, 120 über eine Halteleitung 823 mit der Einheit 821 verbunden, während eine zweite Halteleitung 822 von dem zweiten Paar 200 von Recheneinheiten 210, 220 zu der Einheit 821 führt. Infolge eines Interrupts, welchen eine der Vergleichseinheiten 130, 230 im Fehlerfall auslöst, wird eine der Halteleitungen 822, 823 durch die Einheit 821 aktiviert, je nachdem, welches Paar 100, 200 fehlerhaft arbeitet. Die aktivierte Halteleitung 822, 823 hält das entsprechende Paar 100, 200 von Recheneinheiten 110, 120, 210, 220 in seiner augenblicklichen Position der Abarbeitung des Programms an, so dass von den Recheneinheiten 110, 120 bzw. 210, 220 keine Ausgangssignale ausgegeben werden.

## Patentansprüche

1. Verfahren zur Fehlerbehandlung eines Rechnersystems, welches mindestens zwei Paare (100, 200) mit jeweils zwei Ausführungseinheiten (110, 120; 210, 220) aufweist, wobei die zwei Ausführungseinheiten (110, 120; 210, 220) ein gleiches Programm abarbeiten und die Ausgangssignale der Ausführungseinheiten (110, 120; 210, 220) eines Paares (100, 200) miteinander verglichen werden, wobei beim Auftreten einer Abweichung der Ausgangssignale der Ausführungseinheiten (110, 120; 210, 220) eines Paares (100, 200) voneinander ein Fehlersignal ausgegeben wird, **dadurch gekennzeichnet, dass** beim Auftreten des Fehlersignales eines Paares das Programm zwischen wenigstens zwei Mengen (1100, 1200) von mindestens eine Funktion beschreibenden Programmteilen (1101, 1102, 1103; 1201, 1202, 1203) umgeschaltet wird wobei die erste Menge (1100) die eine Funktion beschreibenden Programmteile (1101, 1102, 1103) umfasst, die in einem Normalbetrieb ausgeführt werden, dass nach dem Auftreten des Fehlersignals das fehlerhaft arbeitende Paar (100) abgeschaltet wird, wobei das fehlerfrei arbeitende Paar (200) die zweite Menge (1200) von mindestens eine Funktion beschreibenden Programmteilen (1201, 1202, 1203) bearbeitet, die wenigstens eine Basisfunktionalität des Rechnersystems (1) umfasst und dass die erste Menge (1100) von mindestens eine Funktion beschreibenden Programmteilen (1001, 1102, 1103) und die zweite Menge (1200) von mindestens eine Funktion beschreibender Programmteile (1201, 1202, 1203) sich in ihrem Funktionsumfang unterscheiden.

2. Verfahren nach Anspruch 1 **dadurch gekennzeichnet, dass** die erste Menge (1100) von mindestens eine Funktion beschreibenden Programmteilen (1101, 1102, 1103) nur ausgeführt wird, wenn das Fehlersignal an dem Paar (100, 200) ausbleibt, während die zweite Menge (1200) von mindestens eine Funktion beschreibenden Programmteilen (1201, 1202, 1203) nur ausgeführt wird, wenn an einem Paar (100, 200) ein Fehlersignal detektiert wird.

3. Verfahren nach einem der vorhergehenden Ansprüche **dadurch gekennzeichnet, dass** die erste Menge (1100) von mindestens eine Funktion beschreibenden Programmteilen (1101, 1102,1103), welche vor der Detektion eines Fehlers eines Paares (100, 200) ausgeführt wird, als auch die zweite Menge 1200) von mindestens eine Funktion beschreibenden Programmteilen (1201, 1202, 1203), die nach dem Auftreten des Fehlersignales ausgeführt wird, Funktionen beinhalten, die sicherheitsrelevant sind.

4. Verfahren nach Anspruch 1 **dadurch gekennzeichnet, dass** das fehlerhaft arbeitende Paar (100) von Ausführungseinheiten (110, 120) einen Selbsttest durchführt und bei Ausbleiben eines weiteren Fehlersignales wieder in Betrieb genommen wird und die erste Menge (1100) von mindestens eine Funktion beschreibenden Programmteilen (1101, 1102, 1103) bearbeitet, welche die Gesamtfunktionalität des Rechnersystems (1) umfasst.

5. Verfahren nach Anspruch 4 **dadurch gekennzeichnet, dass** bei Auftreten des weiteren Fehlersignals das fehlerhaft arbeitende Paar (100) von Ausführungseinheiten (110,120) permanent abgeschaltet wird.

6. Verfahren nach Anspruch 5 **dadurch gekennzeichnet, dass** die Abschaltung des fehlerhaft arbeitenden Paares (100) von Ausführungseinheiten (110, 120) durch eine Unterbrechung eines Taktsignals erfolgt.

7. Verfahren nach Anspruch 5 **dadurch gekennzeichnet, dass** die Abschaltung des fehlerhaft arbeitenden Paares (100) von Ausführungseinheiten (110, 120) durch die Unterbrechung der Spannungsversorgung erfolgt.

8. Verfahren nach Anspruch 5 **dadurch gekennzeichnet, das** die Abschaltung des fehlerhaft arbeitenden Paares (100) von Ausführungseinheiten (110, 120) durch Einschalten eines Haltesignals an dem fehlerhaft arbeitenden Paar (100) erfolgt.

9. Verfahren nach Anspruch 1 **dadurch gekennzeichnet, dass** die Detektion des Fehlersignales während eines Starts der Rechnersystems (1) erfolgt, wobei das fehlerhaft arbeitende Paar (100) nicht in Betrieb genommen wird und das fehlerfrei arbeitende Paar (200) von Beginn an die zweite Menge (1200) von mindestens eine Funktion beschreibenden Programmteilen (1201, 1202, 1203) ausführt.

10. Vorrichtung zur Fehlerbehandlung eines Rechnersystems, welches mindestens zwei Paare (100, 200) mit jeweils zwei Ausführungseinheiten (110,120; 210, 220) aufweist, wobei die zwei Ausführungseinheiten (110, 120; 210, 220) ein gleiches Programm abarbeiten und die Ausgangssignale der Ausführungseinheiten (110, 120; 210, 220) eines Paares (100, 200) miteinander verglichen werden, wobei beim Auftreten einer Abweichung der Ausgangssignale der Ausführungseinheiten (110, 120; 210, 220) eines Paares (100, 200) voneinander ein Fehlersignal ausgegeben wird, **dadurch gekennzeichnet, dass** Mittel (130, 130; 400, 500) vorhanden sind, welche beim Auftreten des Fehlersignales eines Paares (100, 200) das Programm zwischen wenigstens zwei Mengen (1100, 1200) von mindestens eine Funktion beschreibenden Programmteilen (1101, 1102, 1103; 1201, 1202, 1203) umschaltet wobei die erste Menge (1100) die eine Funktion beschreibenden Programmteile (1101, 1102, 1103) umfasst, die in einem Normalbetrieb ausgeführt werden, dass weitere Mittel vorgesehen sind durch die nach dem Auftreten des Fehlersignals das fehlerhaft arbeitende Paar (100) abgeschaltet wird, wobei das fehlerfrei arbeitende Paar (200) die zweite Menge (1200) von mindestens eine Funktion beschreibenden Programmteilen (1201, 1202, 1203) bearbeitet, die wenigstens eine Basisfunktionalität des Rechnersystems (1) umfasst und dass die erste Menge (1100) von mindestens eine Funktion beschreibenden Programmteilen (1001, 1102, 1103) und die zweite Menge (1200) von mindestens eine Funktion beschreibender Programmteile (1201, 1202, 1203) sich in ihrem Funktionsumfang unterscheiden.

11. Vorrichtung nach Anspruch 10 **dadurch gekennzeichnet, dass** jedes Paar (100, 200) von Ausführungseinheiten (110, 120; 210, 220) mit einer den Fehlerfall signalisierenden Vergleichseinheit (130, 230) verbunden ist, welche über eine Kommunikationsleitung (300) auf mindestens einen Speicher (400, 500) führt, der Programmbefehle und/oder Programmdaten zur Aktivierung der ersten (1100) oder der zweiten Menge (1200) von mindestens eine Funktion beschreibenden Programmteilen (1101, 1102, 1103; 1201, 1202, 1203) enthält.

12. Vorrichtung nach Anspruch 10 oder 11 **dadurch gekennzeichnet, dass** die Vergleichseinheit (130) des fehlerhaft arbeitenden Paares (100) von Ausführungseinheiten (110,120) eine Statusanzeige aufweist, welche bei Vorliegen eines Fehlersignals geändert wird.

13. Vorrichtung nach Anspruch 12 **dadurch gekennzeichnet, dass** die Statusanzeige der dem fehlerhaft arbeitenden Paar (100) von Ausführungseinheiten (110, 120) zugeordneten Vergleichseinheit (130) durch das fehlerfrei arbeitende Paar (200) von Ausführungseinheiten (210, 220) lesbar ist.

14. Vorrichtung nach Anspruch 12 oder 13, **dadurch gekennzeichnet, dass** die dem fehlerhaft arbeitenden Paar (100) von Ausführungseinheiten (110, 120) zugeordnete Vergleichseinheit (130) bei Feststellung eines Fehlers einen Interrupt ausgibt, welcher von den Ausführungseinheiten (210, 220) des fehlerfrei arbeitenden Paares (200) empfangen wird.

## Claims

1. Method for handling errors in a computer system which has at least two pairs (100, 200) containing two respective execution units (110, 120; 210, 220), wherein the two execution units (110, 120; 210, 220) execute an identical program and the output signals from the execution units (110, 120; 210, 220) in a pair (100, 200) are compared with one another, wherein the occurrence of a discrepancy between the output signals from the execution units (110, 120; 210, 220) in a pair (100, 200) prompts the output of an error signal, **characterized in that** the occurrence of the error signal from a pair prompts the program to be changed over between at least two sets (1100, 1200) of program portions (1101, 1102, 1103; 1201, 1202, 1203) describing at least one function, wherein the first set (1100) comprises the program portions (1101, 1102, 1103) describing a function which are executed in a normal mode, **in that** the occurrence of the error signal is followed by the erroneously operating pair (100) being disconnected, wherein the correctly operating pair (200) processes the second set (1200) of program portions (1201, 1202, 1203) describing at least one function, which comprises at least one basic functionality of the computer system (1), and **in that** the first set (1100) of program portions (1101, 1102, 1103) describing at least one function and the second set (1200) of program portions (1201, 1202, 1203) describing at least one function differ in terms of their scope of functions.

2. Method according to Claim 1, **characterized in that** the first set (1100) of program portions (1101, 1102, 1103) describing at least one function is executed only if the error signal is absent from the pair (100, 200), while the second set (1200) of program portions (1201, 1202, 1203) describing at least one function is executed only if an error signal is detected on a pair (100, 200).

3. Method according to one of the preceding claims, **characterized in that** the first set (1100) of program portions (1101, 1102, 1103) describing at least one function, which is executed before the detection of an error in a pair (100, 200), and the second set (1200) of program portions (1201, 1202, 1203) describing at least one function, which is executed after the occurrence of the error signal, contain functions which are relevant to safety.

4. Method according to Claim 1, **characterized in that** the erroneously operating pair (100) of execution units (110, 120) performs a self-test and is started up again in the absence of a further error signal and processes the first set (1100) of program portions (1101, 1102, 1103) describing at least one function, which comprises the overall functionality of the computer system (1).

5. Method according to Claim 4, **characterized in that** the occurrence of the further error signal prompts the erroneously operating pair (100) of execution units (110, 120) to be disconnected permanently.

6. Method according to Claim 5, **characterized in that** the erroneously operating pair (100) of execution units (110, 120) is disconnected by an interruption of a clock signal.

7. Method according to Claim 5, **characterized in that** the erroneously operating pair (100) of execution units (110, 120) is disconnected by the interruption in the power supply.

8. Method according to Claim 5, **characterized in that** the erroneously operating pair (100) of execution units (110, 120) is disconnected by switching on a stop signal on the erroneously operating pair (100).

9. Method according to Claim 1, **characterized in that** the error signal is detected while the computer system (1) is starting, wherein the erroneously operating pair (100) is not started up and the correctly operating pair (200) from the outset executes the second set (1200) of program portions (1201, 1202, 1203) describing at least one function.

10. Apparatus for handling errors in a computer system which has at least two pairs (100, 200) containing two respective execution units (110, 120; 210, 220), wherein the two execution units (110, 120; 210, 220) execute an identical program and the output signals from the execution units (110, 120; 210, 220) in a pair (100, 200) are compared with one another, wherein the occurrence of a discrepancy between the output signals from the execution units (110, 120; 210, 220) in a pair (100, 200) prompts the output of an error signal, **characterized in that** means (130, 230; 400, 500) are present which, upon the occurrence of the error signal from a pair (100, 200), change over the program between at least two sets (1100, 1200) of program portions (1101, 1102, 1103; 1201, 1202, 1203) describing at least one function, wherein the first set (100) comprises the program portions (1101, 1102, 1103) describing a function which are executed in a normal mode, **in that** further means are provided which disconnect the erroneously operating pair (100) following the occurrence of the error signal, wherein the correctly operating pair (200) processes the second set (1200) of program portions (1201, 1202, 1203) describing at least one function, which comprises at least one basic functionality of the computer system (1), and **in that** the first set (1100) of program portions (1101, 1102, 1103) describing at least one function and the second set (1200) of program portions (1201, 1202, 1203) describing at least one function differ in terms of their scope of functions.

11. Apparatus according to Claim 10, **characterized in that** each pair (100, 200) of execution units (110, 120; 210, 220) is connected to a comparison unit (130, 230) which signals the error and which is routed via a communication line (300) to at least one memory (400, 500) which contains program commands and/or program data for activating the first (1100) or the second (1200) set of program portions (1101, 1102, 1103; 1201, 1202, 1203) describing at least one function.

12. Apparatus according to Claim 10 or 11, **characterized in that** the comparison unit (130) of the erroneously operating pair (100) of execution units (110, 120) has a status indicator which is changed when an error signal is present.

13. Apparatus according to Claim 12, **characterized in that** the status indicator of the comparison unit (130) associated with the erroneously operating pair (100) of execution units (110, 120) can be read by the correctly operating pair (200) of execution units (210, 220).

14. Apparatus according to Claim 12 or 13, **characterized in that** the comparison unit (130) associated with the erroneously operating pair (100) of execution units (110, 120) outputs an interrupt when an error is detected, which interrupt is received by the execution units (210, 220) in the correctly operating pair (200).

## Revendications

1. Procédé de traitement des défauts d'un système informatique, lequel présente au moins deux paires (100, 200) comprenant respectivement deux unités d'exécution (110, 120 ; 210, 220), les deux unités d'exécution (110, 120 ; 210, 220) exécutant un même programme et les signaux de sortie des unités d'exécution (110, 120 ; 210, 220) d'une paire (100, 200) étant comparés entre eux, un signal d'erreur étant délivré s'il se produit une différence entre les signaux de sortie des unités d'exécution (110, 120 ; 210, 220) d'une paire (100, 200), **caractérisé en ce que** lorsque le signal d'erreur d'une paire apparaît, le programme est permuté entre au moins deux quantités (1100, 1200) de parties de programme (1101, 1102, 1103 ; 1201, 1202, 1203) décrivant au moins une fonction, la première quantité (1100) comprenant les parties de programme (1101, 1102, 1103) décrivant une fonction qui sont exécutées dans un mode normal, **en ce qu'**après l'apparition du signal d'erreur, la paire (100) qui fonctionne de manière erronée est déconnectée, la paire (200) qui fonctionne sans défaut traitant la deuxième quantité (1200) de parties de programme (1201, 1202, 1203) qui décrivent au moins une fonction, laquelle inclut au moins une fonctionnalité de base du système informatique (1) et **en ce que** la première quantité (1100) de parties de programme (1101, 1102, 1103) décrivant au moins une fonction et la deuxième quantité (1200) de parties de programme (1201, 1202, 1203) décrivant au moins une fonction se différencient au niveau de l'étendue de la fonction.

2. Procédé selon la revendication 1, **caractérisé en ce que** la première quantité (1100) de parties de programme (1101, 1102, 1103) décrivant au moins une fonction n'est exécutée que lorsque le signal d'erreur reste désactivé sur la paire (100, 200), alors que la deuxième quantité (1200) de parties de programme (1201, 1202, 1203) décrivant au moins une fonction n'est exécutée que si un signal d'erreur est détecté sur une paire (100, 200).

3. Procédé selon l'une des revendications précédentes, **caractérisé en ce que** la première quantité (1100) de parties de programme (1101, 1102, 1103) décrivant au moins une fonction, laquelle est exécutée avant la détection d'une erreur d'une paire (100, 200), ainsi que la deuxième quantité (1200) de parties de programme (1201, 1202, 1203) décrivant au moins une fonction, laquelle est exécutée après l'apparition du signal d'erreur, contiennent des fonctions qui sont en rapport avec la sécurité.

4. Procédé selon la revendication 1, **caractérisé en ce que** la paire (100) d'unités d'exécution (110, 120) qui fonctionne de manière erronée effectue un autotest et, en l'absence d'un nouveau signal d'erreur, est remise en service et traite la première quantité (1100) de parties de programme (1101, 1102, 1103) décrivant au moins une fonction, laquelle inclut l'ensemble de la fonctionnalité du système informatique (1).

5. Procédé selon la revendication 4, **caractérisé en ce que** si le signal d'erreur se reproduit, la paire (100) d'unités d'exécution (110, 120) qui fonctionne de manière erronée est déconnectée de manière permanente.

6. Procédé selon la revendication 5, **caractérisé en ce que** la déconnexion de la paire (100) d'unités d'exécution (110, 120) qui fonctionne de manière erronée s'effectue en interrompant un signal d'horloge.

7. Procédé selon la revendication 5, **caractérisé en ce que** la déconnexion de la paire (100) d'unités d'exécution (110, 120) qui fonctionne de manière erronée s'effectue en interrompant l'alimentation électrique.

8. Procédé selon la revendication 5, **caractérisé en ce que** la déconnexion de la paire (100) d'unités d'exécution (110, 120) qui fonctionne de manière erronée s'effectue en activant un signal d'arrêt sur la paire (100) qui fonctionne de manière erronée.

9. Procédé selon la revendication 1, **caractérisé en ce que** la détection du signal d'erreur est effectuée pendant un démarrage du système informatique (1), la paire (100) qui fonctionne de manière erronée n'étant pas mise en service et la paire (200) qui fonctionne sans défaut exécutant dès le départ la deuxième quantité (1200) de parties de programme (1201, 1202, 1203) décrivant au moins une fonction.

10. Dispositif de traitement des défauts d'un système informatique, lequel présente au moins deux paires (100, 200) comprenant respectivement deux unités d'exécution (110, 120 ; 210, 220), les deux unités d'exécution (110, 120 ; 210, 220) exécutant un même programme et les signaux de sortie des unités d'exécution (110, 120 ; 210, 220) d'une paire (100, 200) étant comparés entré eux, un signal d'erreur étant dégivré s'il se produit une différence entre les signaux de sortie des unités d'exécution (110, 120 ; 210, 220) d'une paire (100, 200), **caractérisé en ce qu'**il existe des moyens (130, 230 ; 400, 500) qui, lorsque le signal d'erreur d'une paire (100, 200) apparaît, permutent le programme entre au moins deux quantités (1100, 1200) de parties de programme (1101, 1102, 1103 ; 1201, 1202, 1203) décrivant au moins une fonction, la première quantité (1100) comprenant les parties de programme (1101, 1102, 1103) décrivant une fonction qui sont exécutées dans un mode normal, **en ce que** d'autres moyens sont prévus par le biais desquels, après l'apparition du signal d'erreur, la paire (100) qui fonctionne de manière erronée est déconnectée, la paire (200) qui fonctionne sans défaut traitant la deuxième quantité (1200) de parties de programme (1201, 1202, 1203) qui décrivent au moins une fonction, laquelle inclut au moins une fonctionnalité de base du système informatique (1) et **en ce que** la première quantité (1100) de parties de programme (1101, 1102, 1103) décrivant au moins une fonction et la deuxième quantité (1200) de parties de programme (1201, 1202, 1203) décrivant au moins une fonction se différencient au niveau de l'étendue de la fonction.

11. Dispositif selon la revendication 10, **caractérisé en ce que** chaque paire (100, 200) d'unités d'exécution (110, 120 ; 210, 220) est reliée à une unité de comparaison (130, 230) qui signale la situation de défaut, laquelle mène par le biais d'une ligne de communication (300) à au moins une mémoire (400, 500) qui contient des instructions de programme et/ou des données de programme destinées à activer la première (1100) ou la deuxième (1200) quantité de parties de programme (1101, 1102, 1103 ; 1201, 1202, 1203) décrivant au moins une fonction.

12. Dispositif selon la revendication 10 ou 11, **caractérisé en ce que** l'unité de comparaison (130) de la paire (100) d'unités d'exécution (110, 120) qui fonctionne de manière erronée présente un indicateur d'état qui est modifié en présence d'un signal d'erreur.

13. Dispositif selon la revendication 12, **caractérisé en ce que** l'indicateur d'état de l'unité de comparaison (130) associée à la paire (100) d'unités d'exécution (110, 120) qui fonctionne de manière erronée est lisible par la paire (200) d'unités d'exécution (210, 220) qui fonctionne sans défaut.

14. Dispositif selon la revendication 12 ou 13, **caractérisé en ce que** l'unité de comparaison (130) associée à la paire (100) d'unités d'exécution (110, 120) qui fonctionne de manière erronée, en cas de constatation d'un défaut, délivre une interruption qui est reçue par les unités d'exécution (210, 220) de la paire (200) qui fonctionne sans défaut.
